# EUROPEAN PATENT APPLICATION

(11) **EP 4 614 333 A1**
(43) Date of publication of application: **10.09.2025**
(21) Application number: 24161806.5
(22) Date of filing: 06.03.2024
(51) Int. Cl.: G06F 11/36

(54) **METHOD FOR MODIFYING TEST DATA FOR AUTONOMOUS DRIVING**

(71) Applicant: Siemens Industry Software NV, 3001 Leuven (BE)
(72) Inventor: Tong, Son, 3001 Leuven (BE)
(74) Representative: Siemens Patent Attorneys

(57) **Abstract**

The invention relates to a Method for modifying test data for autonomous driving wherein the test data (DTA) is vehicle sensor (SNR) data (DTA) for testing a driver assistance system (ADS), wherein the change of test data (DTA) is made from a first scenario (FSC) to a second modified scenario (SMS), wherein the test data (DTA) includes optical camera (OPC) data (DTA) and/or radar (RDR) data (DTA) and/or LIDAR (LDR) data (DTA). It is proposed,
that the modification of test data (DTA) is made using AI technology (AIT),
wherein an input (INT) into the modification process comprises the sensor (SNR) data (DTA) of the first scenario (FSC) and specifications (ODD) for modifying the sensor (SNR) data (DTA),
wherein an output comprises vehicle sensor (SNR) data (DTA) according to the second modified scenario (SMS).

## Description

The present invention relates to a method for modifying test data for autonomous driving. Furthermore, the invention relates to a device for modifying test data for autonomous driving.

The general field of the invention is testing autonomous driving systems - often referred to as advanced driver assistance systems [ADAS]. More specifically the invention aims to perform the testing not in real traffic but to simulate the traffic scenarios in a laboratory environment putting the ADAS-modules to be tested in a HIL, MIL, SIL, VIL-testing environment.

Herein, the abbreviations are known as
- HIL (Hardware-in-the-Loop) Testing: HIL testing involves testing a system or component by integrating real hardware with a simulated or emulated environment.
- MIL (Model-in-the-Loop) Testing: MIL testing involves testing a system or component using a simulation model of its behavior.
- SIL (Software-in-the-Loop) Testing: SIL testing involves testing the software components of a system in an isolated software environment.
- VIL (Vehicle-in-the-Loop) Testing: This type of testing involves integrating a physical vehicle with a simulated or emulated environment.

In the context of ADAS an Operational Design Domain [ODD] is a concept used in the field of autonomous vehicles. It refers to the specific conditions and circumstances in which a self-driving vehicle is designed to operate safely. The ODD encompasses factors such as the geographic area, weather conditions, road types, speed limits, and other environmental and operational constraints under which the autonomous vehicle is intended to function properly. Defining the ODD is crucial as it helps ensure that the autonomous vehicle operates within its capabilities and avoids situations where it may not be able to safely navigate or respond appropriately.

The association for standardization of automation and measuring systems [ASAM], a German standardization body published a new international standard concept for defining ODDs under: https://www.asam.net/standards/detail/openodd/. This ASAM OpenODD concept enables governments and the automotive industry to access ODD descriptions that are exchangeable, comparable, and processable.

The ODD is often written by engineers dealing with autonomous vehicle safety or functional requirements. Current works in automotive industry manually interpret the ODD requirements to engineering requirements, then integrate them into scenario descriptions in simulation or real data logging. This method requires manual tuning to specific ODD details, specific ODD expansion, i.e. adapt a scenario from an EU to Asian street, and the generated data is still less realistic than real data scenarios.

The importance of the ODD in the field of ADAS/AV development is significant since those scenarios and data are used for ADAS testing and validation and since the requirement is to generate scenarios that - in total - cover the ODD. Due to these requirements the ODDs are gradually expanded. For example, the test scenarios should not only comprise dry and sunny scenes but also rainy or snowy weather conditions. Other examples are different surrounding cars or different street/road styles (i.e., streets in EU, USA, or Asia) or even different traffic situations like road constructions blocking the way.

The data can be generated via either simulation or a real data logging campaign. Both options have advantages and disadvantages. The real data campaigns are very expensive. Simulating data is significantly cheaper than collecting real data, but normally requires manual tuning to specific ODD details like adapt a scenario from an EU street to an Asian street. Typically, simulation data is less realistic and accurate than real-world data. Using only real data campaign data is insufficient for covering the full range necessary to fulfill the ODDs.

In the last years, experts have been working with multiple MiL, HiL, and ViL testing projects on several autonomous driving vehicle platforms (Ford Focus, Simrod, Ranger Rover Evoque). Experts also used simulation tools for scenario generation for example HEEDs (=> Hierarchical Evolutionary Engineering Design System, developed by Siemens Digital Industries Software, is a commercial software tool used for design exploration and optimization) and falsification techniques, for example: Surpassing ADAS safety and comfort expectations while reducing extensive testing. One example may be found under: https://www.youtube.com/watch?v=XP16qm1YBoo.

One object of the invention is bridging the gap between simulation and real data, i.e. Sim2Real (=> Simulation to Reality, refers to a research and development paradigm in artificial intelligence and robotics) and Real2Sim (=> mutatis mitandis) topics, overcoming the limitations of simulation data and models such that they are beneficial for physical system development.

The invention is based on the problem of improving the known method for modifying test data such that a further optimization is reached regarding the above explained challenges.

In order to overcome the limitations of current test data generation and adaption the invention proposes a method according to claim 1 and a device according to the independent product claim preferably prepared to carry out a method according to the invention.

Proposed is a method for modifying test data for ADAS and/or autonomous driving wherein the test data is vehicle sensor data for testing a driver assistance system, wherein the change of test data is made from a first scenario to a second modified scenario, wherein the test data includes optical camera data and/or radar data and/or LIDAR data.

Essential is that the modification of test data is made using AI technology, wherein an input into the modification process comprises the sensor data of the first scenario and specifications for modifying the sensor data, wherein an output comprises vehicle sensor data according to the second modified scenario.

According to one embodiment it is proposed, the first scenario represents a specific traffic situation, and the modification of the test data results in a second modified scenario representing a modified traffic situation.

According to one embodiment it is proposed that the modification of the test data includes optical camera data by fitting certain visual features in the vehicle sensor data.

According to one embodiment it is proposed that the modification of the test data includes radar data by modifying the distances and velocities of objects in the vehicle sensor data.

According to one embodiment it is proposed that the modification of the test data includes LIDAR data by adjusting the spatial detection of objects in the vehicle sensor data.

According to one embodiment it is proposed that the AI technology includes machine learning and/or neural networks to perform the modification of the test data for autonomous driving.

According to one embodiment it is proposed that the specifications for modifying the test data of autonomous driving include parameters such as speed, position, vehicle behavior or road conditions.

According to one embodiment it is proposed that the modified test data for autonomous driving to test and evaluate the performance and reliability of an advanced driver assistance system in various scenarios.

According to one embodiment it is proposed that the AI technology includes image-to-image translation and the method comprises modifying the test data for autonomous driving by transforming optical camera data into modified scenarios.

According to one embodiment it is proposed that the AI technology includes style transfer or neural style transfer and the method comprises modifying the test data for autonomous driving by applying different styles and visual features to the optical camera data.

According to one embodiment it is proposed that the AI technology includes Object Segmentation and Replacement, and the method comprises modifying the test data for autonomous driving through the segmentation and replacement of certain objects in the optical camera data.

According to one embodiment it is proposed that the AI technology includes scene reconstruction and the method comprises modifying said test data for autonomous driving by the partial reconstruction of the data, wherein the modifications include at least one of the following features: generating new 3D models, changing textures, and changing lighting conditions.

According to one embodiment it is proposed that the AI technology includes Al-assisted 3D modeling and rendering techniques and the method comprises modifying the test data for autonomous driving through the application of advanced Al algorithms to generate and display 3D models of the vehicle's environment.

According to one embodiment it is proposed that said specifications are textual specifications.

According to one embodiment it is proposed that during a first step sensor data are acquired during a real data logging campaign respectively during a test drive with a vehicle.

In a second step these test data may be used as said first scenario test data in a method according to the invention or one of its embodiments.

Another teaching of the invention relates to a device for modifying test data for autonomous driving, in particular for carrying out a method according to the invention as defined herein.

Essential feature of the device for modifying test data for autonomous driving is that the device comprises a data processing unit and a memory arrangement to store test data for autonomous driving, wherein the test data is vehicle sensor data for testing a driver assistance system, wherein the change of test data is made from a first scenario to a second modified scenario, wherein the test data includes optical camera data and/or radar data and/or LIDAR data.

According to one embodiment it is proposed, an Al-module comprising
- Al-technology wherein said Al-technology configured for modifying the test data from a first scenario to a second modified scenario;
- a communication channel to receive the test data;
- an AI algorithm based on AI technology, capable of analyzing, transforming, and modifying the test data;
- an output unit to provide the modified test data for use in autonomous driving testing.

According to a preferred embodiment, an AI technology module is proposed that is configured to modify the test data from a first scenario to a second modified scenario; which AI technology module has a communication channel capable of receiving the test data; which comprises an Al-algorithm based on Al-technology capable of analyzing, transforming, and modifying the test data; which has an output unit to provide the modified test data for use in autonomous driving tests.

According to one embodiment it is proposed, that said AI technology module is configured such that it includes at least one of image-to-image translation, style transfer, object segmentation and replacement, scene reconstruction, Al-powered 3D modeling and rendering techniques.

All explanations given with regard to the method for modifying test data are fully applicable to the device respectively to the Al-module as well.

This involves training an AI model to learn the style or characteristics of winter scenes and then applying that style to the original summer scene.

There are several options to train the AI model to perform according to the above objectives. Below some possibilities are outlined:
- Supervised Learning: In this approach, a dataset, e.g., of summer and winter scenes, are paired together. Providing AI model with examples of summer scenes and their corresponding winter versions enables the AI model to perform the mapping between the two styles. This may be done for any kind of modification the AI is expected to perform. This approach requires labeled data, which can be time-consuming and costly to obtain if the labelling is done manually.
- Unsupervised Learning: without access to e.g., paired summer and winter scenes, unsupervised learning techniques may be used. One possibility is to use generative adversarial networks (GANs). GANs consist of two neural networks, a generator and a discriminator, which compete against each other to produce realistic images. By training a GAN on a large dataset of both, e.g., summer and winter scenes, new winter scenes based on the learned style can be generated.
- Transfer Learning: Another option is to use a pre-trained model that has already been trained on a large dataset of images or videos. For example, a pre-trained model like CycleGAN may be used, which is specifically designed for image-to-image translation tasks. By fine-tuning the pre-trained model on the specific summer-to-winter task or any other modification task, good results may be achieved with less training time and data.

The method for modifying test data for autonomous driving may comprise as a previous or preparatory step a step of training an AI module to alter a given test data of a traffic situation, wherein the AI module modifies the traffic situation itself (road blocking, pedestrian entering the road, additional traffic lights, more other vehicles, etc.) or in terms of weather conditions, lighting conditions, or any type of style - such as country specific road style, e.g., US road, European road, Asian road - to produce a realistic and coherent representation of the altered movie scenario.

This additional step may comprise training the AI module by providing a variety of training data covering various recorded test data, including traffic situations on US roads, EU roads and Asian roads, as well as different weather conditions (preferably of the same location), lighting conditions (preferably of the same location) and styles.

This additional step may comprise generating the training data by acquiring and recording real test campaign data using sensors and cameras in different geographical regions or weather conditions.

This additional step may involve the AI module comprising a neural network architecture to learn and generate the modification of the movie scenario based on the input parameters obtained.

This additional step may comprise training the AI module using training data for modifying the film scenario such that the AI module is also capable of taking into account and adapting traffic flow patterns, traffic rules and behavior of road users in the altered film scenario. In general, the training data for the Al-module may comprise variations of the above parameters together with specifications of the respective scenario respectively explanatory text about the parameters in an ODD text style.

The properties, features and advantages of this invention described above, as well as the manner they are achieved, become clearer and more understandable in the light of the following description and embodiments, which will be described in more detail in the context of the figures. This following description does not limit the invention on the contained embodiments. Same components or parts can be labeled with the same reference signs in different figures. In general, the figures are not for scale. It shall be understood that a preferred embodiment of the present invention can also be any combination of the dependent claims or above embodiments with the respective independent claim.
Figure 1 shows a schematic depiction of the method and a device according to the invention as a flow diagram,
Figure 2 shows a schematic depiction of how an ADAS is tested using the modified scenario sensor data.

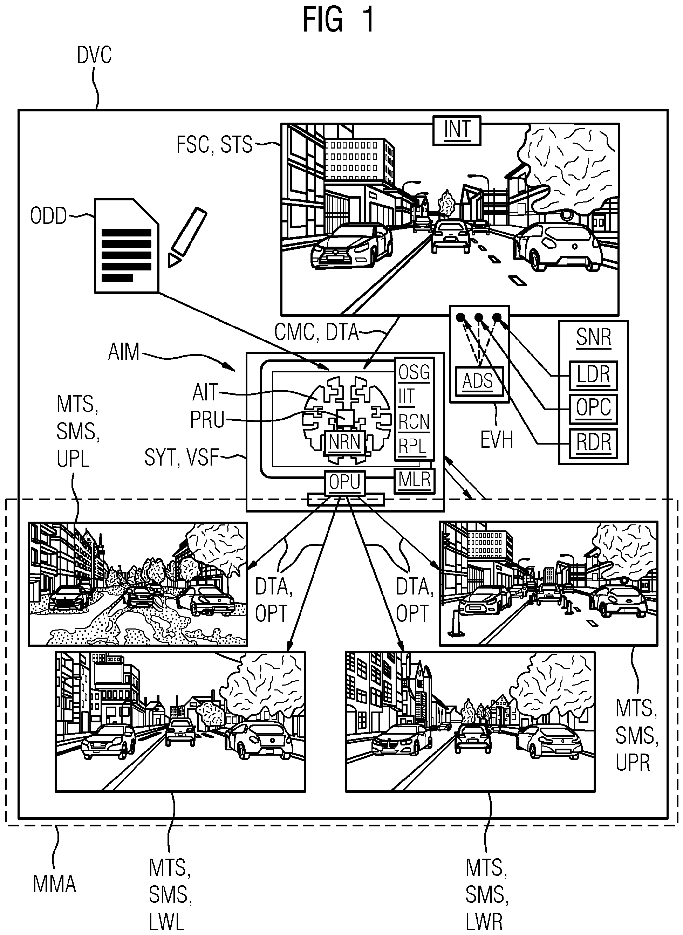

Figure 1 shows in a simplified, schematic flow diagram the method according to the invention for modifying test data for testing a driver assistance system ADS. An example of a device DVC for modifying test data DTA for testing an autonomous driving system is shown, too. The test data DTA is vehicle sensor SNR data DTA. An Ego-vehicle EVH is shown comprising sensors SNR illustrating that the test data DTA includes optical camera OPC data DTA and/or radar RDR data DTA and/or LIDAR LDR data DTA.

The method starts with providing a first scenario FSC. Said first scenario FSC is changed to a second modified scenario SMS, wherein the example shows four different second modified scenario SMS. The original scene is changed to a scene with snow conditions (upper left UPL), with a road construction ahead (upper right UPR), to a scene with Asian style environment (lower left LWL) and to a Belgian style environment (lower right LWR). Carbrands and models are changed to adjust to the different road situations as to be expected.

The modification of test data DTA is made using AI technology AIT, wherein an input INT into the modification process comprises the sensor SNR data DTA of the first scenario FSC and specifications ODD for modifying the sensor SNR data DTA.

The AI technology AIT applied includes machine learning MLR and/or neural networks NRN to perform the modification of the test data DTA for autonomous driving. The specifications ODD for modifying the test data DTA of autonomous driving include parameters such as speed, position, vehicle behavior or road conditions or any other textual description for scenario modification. The AI technology AIT includes:
- image-to-image translation IIT and
- style transfer SYT or neural style transfer SYT by applying different styles and visual features VSF to the optical camera OPC data DTA and
- Object Segmentation OSG and Replacement RPL modifying the test data DTA through the segmentation and replacement RPL of certain objects in the optical camera OPC data DTA and
- scene reconstruction RCN modifying said test data DTA by the partial reconstruction RCN of the data DTA, wherein the modifications include at least one of the following features: generating new 3D models, changing textures, and changing lighting conditions and
- Al-assisted 3D modeling and rendering techniques modifying the test data DTA through the application of advanced AI algorithms to generate and display 3D models of the vehicle's environment.

The specifications ODD is textual input, like for the upper left UPL example of the modified scenario this may be: "the traffic/obstacle cars are Mercedes cars, German street style and typical German road, Snowing conditions".

An output OPT comprises vehicle sensor SNR data DTA according to the respective second modified scenario SMS, here four different second scenarios are illustrated.

The upper right UPR modification may serve as an example, wherein the first scenario FSC represents a specific traffic situation STS (no specific road blocking), and the modification of the test data DTA resulting in said second modified scenario SMS representing a modified traffic situation MTS - here, a road construction ahead.

The Al-technology comprises fitting certain visual features VSF in the vehicle sensor SNR data DTA, e.g., into the optical camera OPC data DTA. This can be seen in the upper right UPR modification, wherein the road blocking elements of the construction are inserted.

In case the test data DTA includes radar RDR data DTA the modifying may be about e.g., changing the distances and velocities of objects in the vehicle sensor SNR data DTA. When dealing with LIDAR LDR data DTA modifying may be about adjusting the spatial detection of objects in the vehicle sensor SNR data DTA.

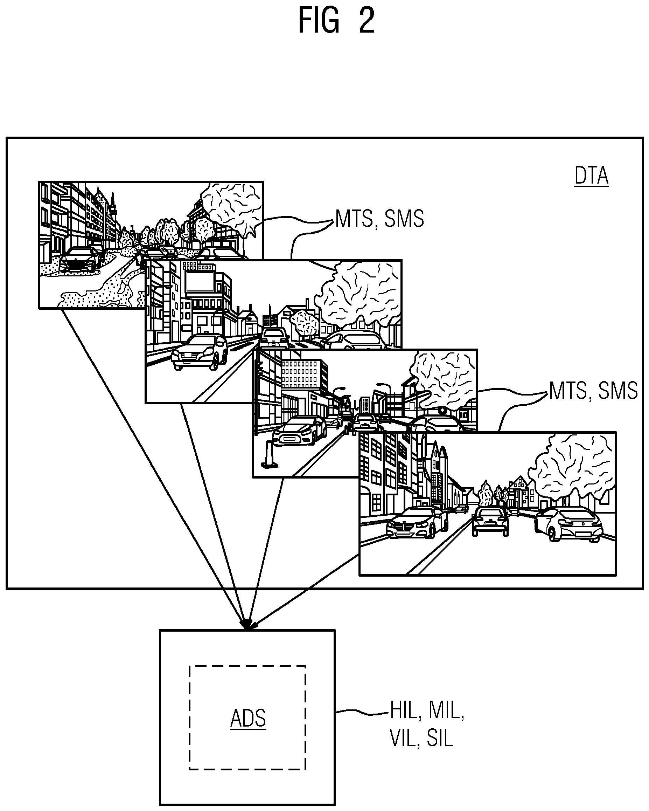

As shown in figure 2 the modified test data DTA is used for autonomous driving to test and evaluate the performance and reliability of an advanced driver assistance system ADS in various scenarios.

Said device for modifying test data DTA comprises a data DTA processing unit PRU and a memory arrangement MMA to store the test data DTA. A communication channel CMC is provided to receive the test data DTA before an AI algorithm based on AI technology AIT analyses, transforms, and modifies the test data DTA. An Al-module AIM is configured to modifying the test data DTA from a first scenario FSC to a second modified scenario SMS using AI technology AIT. The modified test data DTA is provided via an output unit OPU as output OPT for use in autonomous driving testing.

## Claims

1. Method for modifying test data for autonomous driving wherein the test data (DTA) is vehicle sensor (SNR) data (DTA) for testing a driver assistance system (ADS), wherein the change of test data (DTA) is made from a first scenario (FSC) to a second modified scenario (SMS), wherein the test data (DTA) includes optical camera (OPC) data (DTA) and/or radar (RDR) data (DTA) and/or LIDAR (LDR) data (DTA),
**characterized in**
**that** the modification of test data (DTA) is made using AI technology (AIT),
wherein an input (INT) into the modification process comprises the sensor (SNR) data (DTA) of the first scenario (FSC) and specifications (ODD) for modifying the sensor (SNR) data (DTA),
wherein an output comprises vehicle sensor (SNR) data (DTA) according to the second modified scenario (SMS).

2. Method for modifying test data according to claim 1, wherein the first scenario (FSC) represents a specific traffic situation (STS), and the modification of the test data (DTA) results in a second modified scenario (SMS) representing a modified traffic situation (MTS).

3. Method for modifying test data according to claim 1 or 2, wherein the modification of the test data (DTA) includes optical camera (OPC) data (DTA) by fitting certain visual features (VSF) in the vehicle sensor (SNR) data (DTA).

4. Method for modifying test data according to one of the preceding claims, wherein the modification of the test data (DTA) includes radar (RDR) data (DTA) by modifying the distances and velocities of objects in the vehicle sensor (SNR) data (DTA).

5. Method for modifying test data according to one of the preceding claims, wherein the modification of the test data (DTA) includes LIDAR (LDR) data (DTA) by adjusting the spatial detection of objects in the vehicle sensor (SNR) data (DTA).

6. Method for modifying test data according to one of the preceding claims, wherein the AI technology (AIT) includes machine learning (MLR) and/or neural networks (NRN) to perform the modification of the test data (DTA) for autonomous driving.

7. Method for modifying test data according to one of the preceding claims, wherein the specifications (ODD) for modifying the test data (DTA) of autonomous driving include parameters such as speed, position, vehicle behavior or road conditions.

8. Method for modifying test data according to one of the preceding claims, the method comprising using the modified test data (DTA) for autonomous driving to test and evaluate the performance and reliability of an advanced driver assistance system (ADS) in various scenarios.

9. Method for modifying test data according to one of the preceding claims, wherein the AI technology (AIT) includes image-to-image translation (IIT) and the method comprises modifying the test data (DTA) for autonomous driving by transforming optical camera (OPC) data (DTA) into modified scenarios.

10. Method for modifying test data according to one of the preceding claims, wherein the AI technology (AIT) includes style transfer (SYT) or neural style transfer (SYT) and the method comprises modifying the test data (DTA) for autonomous driving by applying different styles and visual features (VSF) to the optical camera (OPC) data (DTA).

11. Method for modifying test data according to one of the preceding claims, wherein the AI technology (AIT) includes Object Segmentation (OSG) and Replacement (RPL) and the method comprises modifying the test data (DTA) for autonomous driving through the segmentation and replacement (RPL) of certain objects in the optical camera (OPC) data (DTA).

12. Method for modifying test data according to one of the preceding claims, **characterized in** wherein the AI technology (AIT) includes scene reconstruction (RCN) and the method comprises modifying said test data (DTA) for autonomous driving by the partial reconstruction (RCN) of the data (DTA), wherein the modifications include at least one of the following features: generating new 3D models, changing textures, and changing lighting conditions.

13. Method for modifying test data according to one of the preceding claims, wherein the AI technology (AIT) includes Al-assisted 3D modeling and rendering techniques and the method comprises modifying the test data (DTA) for autonomous driving through the application of advanced AI algorithms to generate and display 3D models of the vehicle's environment.

14. Method for modifying test data according to one of the preceding claims, wherein said specifications (ODD) are textual specifications (ODD).

15. A device for modifying test data (DTA) for testing an autonomous driving system, in particular for carrying out a method according to at least one of the previous claims, comprising:
a data (DTA) processing unit (PRU) and a memory arrangement (MMA) to store test data (DTA) for autonomous driving,
wherein the test data (DTA) is vehicle sensor (SNR) data (DTA) for testing a driver assistance system (ADS),
wherein the change of test data (DTA) is made from a first scenario (FSC) to a second modified scenario (SMS),
wherein the test data (DTA) includes optical camera (OPC) data (DTA) and/or
radar (RDR) data (DTA) and/or LIDAR (LDR) data (DTA),
**characterized in**
an Al-module (AIM) comprising Al-technology (AIT) is configured to modifying the test data (DTA) from a first scenario (FSC) to a second modified scenario (SMS);
a communication channel (CMC) to receive the test data (DTA);
an AI algorithm based on AI technology (AIT), capable of analyzing, transforming, and
modifying the test data (DTA);
an output unit (OPU) to provide the modified test data (DTA) as output (OPT) for use in autonomous driving testing.

16. A device according to claim 15, wherein said Al-module (AIM) comprising Al-technology (AIT) is configured such that it includes at least one of image-to-image translation (IIT), style transfer (SYT), object segmentation (OSG) and
replacement (RPL), scene reconstruction (RCN), Al-powered 3D modeling and rendering techniques.
